# EUROPEAN PATENT APPLICATION

(11) **EP 4 556 883 A1**
(43) Date of publication of application: **21.05.2025**
(21) Application number: 23751659.6
(22) Date of filing: 13.07.2023
(51) Int. Cl.: G01N 1/38, G01N 35/00, G01N 35/10

(54) **MIXING CHAMBER**

(30) Priority: 15.07.2022 ES 202230656
(71) Applicant: Productos Citrosol, S.A., 46721 Potries (Valencia) (ES)
(72) Inventor: PARRA CARBONELL, Javier, 46721 Potries (Valencia) (ES); ISNARDO MORANT, María José, 46721 Potries (Valencia) (ES); MOTTURA LERDA, Martín Carlos, 46721 Potries (Valencia) (ES); DOMÍNGUEZ CASCANT, Raul, 46721 Potries (Valencia) (ES); MORATAL MARTÍ, Francesc, 46721 Potries (Valencia) (ES); ORTEGA NAVARRO, Jesus, 46721 Potries (Valencia) (ES)
(74) Representative: Herrero & Asociados, S.L.
(86) International application number: PCT/ES2023/070451
(87) International publication number: WO 2024/013422

(57) **Abstract**

Mixing chamber (100) configured to dilute a post-harvest treatment sample with solvent, where post-harvest treatment is obtained from a post-harvest application reservoir , where the solvent is obtained from a tank containing solvent, the mixing chamber (100) comprises a sample application duct (110), configured to supply the post-harvest treatment sample to a mixing flask (140), a purge funnel (130) configured to collect post-harvest treatment from a purge of the sample application duct (110), and the mixing flask (140), configured to receive the post-harvest treatment sample from the sample application duct (110), receive solvent from the tank containing solvent, dilute with solvent the post-harvest treatment sample, and generate a solvent-diluted post-harvest treatment sample.

## Description

### Object of the invention

The object of the present invention refers to a configured mixing chamber to automatically dilute a post-harvest treatment sample using solvent, and then transferring the diluted sample to an analyzer system, where the post-harvest treatment evidences a variable composition over time (dynamic) and is obtained from a post-harvest for applications reservoir.

### Background of the invention

The already known automatic dilution systems of liquid samples, mainly laboratory equipment, such as the Metrohm Inline Dilution, operate with various discrete and static samples. It is therefore required to perform a solvent cleaning of the sample channel between one sample and the next to avoid cross contamination.

In these systems, a controlled volume of the sample is usually diluted together with another controlled volume of solvent in a stirred container, and, finally, the content is then transferred with the help of some pumping system to another downstream system (for example, to an analyzer). Before switching to the next sample, located in another container (either manually or aided by an automatic carousel) is therefore required to perform a cleaning operation of the sample channel by the passage of clean solvent to avoid cross contamination.

On the contrary, this invention is designed to perform an automated dilution of a dynamic sample, using a system totally different from the current automatic dilution systems to avoid crossed contamination between several samples spaced in time. A totally different system from current automatic dilution systems: by purging the sample channel with the sample itself in real time, instead of performing a discrete wash of said channel with solvent each time.

### Description of the invention

The current invention refers to a configured mixing chamber to dilute post-harvest treatment sample with solvent, where the post-harvest treatment is obtained from a post-harvest application reservoir, where the solvent is obtained from a tank containing solvent. The mixing chamber comprises a sample application duct, configured to supply the post-harvest treatment sample to a mixing flask and a configured funnel to collect the post-harvest treatment flow from the purge of the sample application duct. The mixing flask is configured to receive the post-harvest treatment sample from the sample application conduct, receive solvent from the tank containing solvent, dilute the post-harvest treatment with solvent, and generate a solvent-diluted post-harvest treatment sample.

In a preferred embodiment of the mixing chamber, the sample application duct comprises a sample tube configured to pour post-harvest treatment from a dosing system onto the mixing flask or funnel and a guide piece configured to move the sample tube.

In a preferred embodiment of the mixing chamber, it also comprises a rotary motor connected to the guide piece, where the rotary motor is configured to rotate the guide piece on the shaft of the guide piece.

In a preferred embodiment of the mixing chamber, the mixing flask is glass.

In a preferred embodiment, the mixing chamber also comprises a first tube connected to the mixing flask and tank containing solvent configured to supply solvent to the mixing flask by means of a dosing system, a second tube connected to the mixing flask and to a configured drain pump to evacuate the diluted sample not subject to analysis, and a third capillary tube connected to the mixing flask and a transfer pump and configured to evacuate an aliquot from the diluted sample subject to analysis.

In a preferred embodiment of the mixing chamber, the flask comprises glass connectors configured as interfaces for the first, second and third tube.

In a preferred embodiment, the mixing chamber comprises a drain pump connected to the second tube and configured to empty the diluted sample not subject to analysis.

In a preferred embodiment, the mixing chamber further comprises the transfer pump connected to the third configured tube to transfer the aliquot of the diluted sample subject to analysis.

In a preferred embodiment, the mixing chamber also comprises one or more inductive sensors configured to monitor the movement of the guide piece.

In a preferred embodiment, the mixing chamber also comprises a first capacitive sensor configured to monitor the emptying of the mixing flask.

In a preferred embodiment, the mixing chamber also comprises at least a second capacitive sensor configured to detect overflow of the purge funnel.

### Description of drawings

To complement the current description and to provide a better understanding of the characteristics of the mixing chamber according to a preferred example of its practical implementation, there is attached, as an integral part of that description, a set of drawings with illustrative and non- limiting nature:
Figure 1 shows a front view of the mixing chamber according to this invention.
Figure 2 shows a rear view of the mixing chamber according to this invention.
Figure 3 shows a lower view of the mixing chamber according to this invention.
Figure 4 shows a front view of the mixing flask of the mixing chamber according to this invention.

### Preferential embodiment of the invention

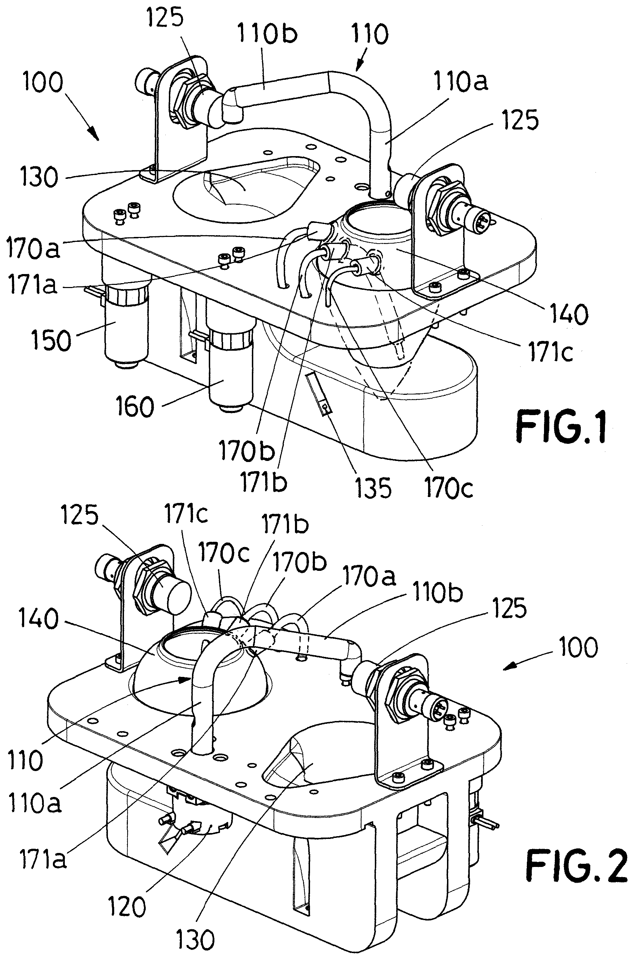

Figures 1, 2 and 3 are different views of a preferred embodiment of the mixing chamber (100) according to the current invention.

As shown in the different views in Figures 1, 2 and 3, the mixing chamber (100) comprises a sample application duct (110) comprising a guide piece (110a) and a sample tube (110B) which circulates within the guide piece, configured items to dispense a sample onto a mixing flask (140) in an analysis mode or onto a purge funnel (130) in a purge mode. The sample may comprise post-harvest treatment with concentrations of different chemical compounds. The sample can be obtained from a post-harvest application system reservoir that can store a post-harvest treatment, for example, from a drain system reservoir.

In addition, the mixing chamber (100) comprises two inductive sensors (125) configured to monitor the movement of the guide piece (110a), i.e. monitor that the guide piece (110a) is located on the mixing flask (140), in analysis mode, or over the purge funnel (130) in purge mode.

In addition, the mixing chamber (100) comprises a capacitive sensor (135) inserted into the mixing chamber body (100), pointing at the bottom of the mixing flask (140). The capacitive sensor (135) is configured to monitor the emptying of the mixing flask (140), where the emptying is carried out by a drain pump (150). The capacitive sensor (135) is configured to warn when the emptying of the mixing flask (140) is complete. If the emptying of the mixing flask (140) falls short of completion, the capacitive sensor value would be an indication of drain pump failure (150).

Figure 2 shows a rear view of the mixing chamber. Thus, the purge funnel (130) that is configured to, in a purge mode, collect fluid from the purge of the post-harvest application system tank, e.g. from a tank in a drain system.

In purge mode, prior to the analysis mode (mode in which a post-harvest treatment sample is diluted with solvent in the mixing chamber (100)), the entire duct through which the sample circulates is purged. The purge is carried out from the post-harvest application system tank via the sample tube (110b), which pours the resulting purge fluid onto the purge funnel (130).

For each analysis carried out in the mixing chamber analysis mode (100), the purging of the duct through which the sample from the post-harvest application system tank is carried out beforehand. Purge mode prevents cross contamination between the current sample and a previous sample associated with a past analysis. since the treatment composition in each sample is dynamic and changes each time an analytical is launched in the analysis mode of the mixing chamber (100).

In purge mode, in order to purge the duct through which the sample flows, the fluid in the post-harvest application system reservoir flows for a predetermined time throughout the sample circuit through the guide piece (110a) and the sample tube (110b) and it is collected through the purge funnel (130) to return it to the system reservoir post-harvest application, i.e. fluid in the post-harvest application system reservoir is recirculated.

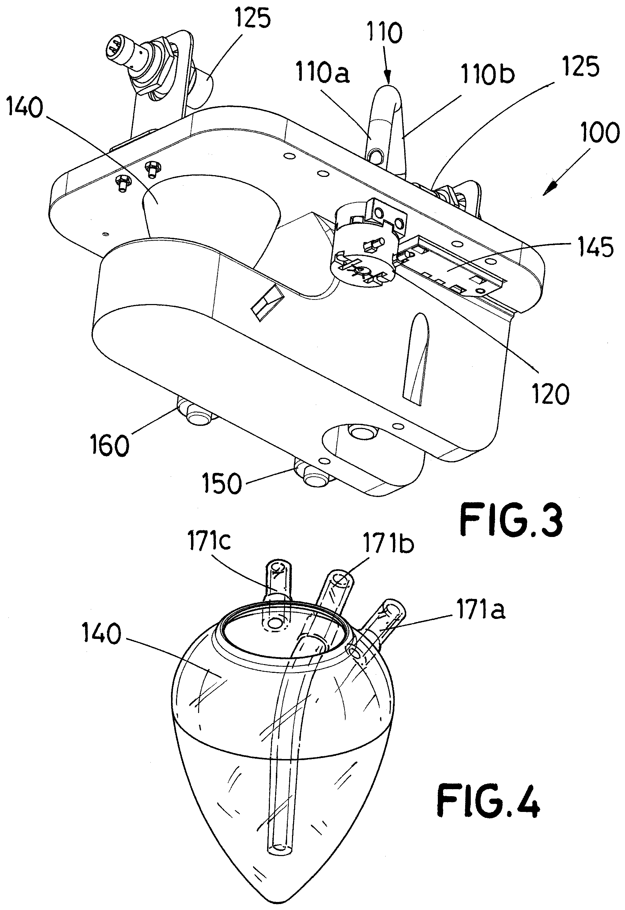

Figure 3 shows a lower view of the mixing chamber (100). The mixing chamber (100) also comprises a rotary motor (120), configured to turn the guide piece (110a), inside which the sample tube (110B) circulates, both in purge mode and in analysis mode. In addition, the inductive sensors (125) are configured to report faults on the rotary motor (120).

In purge mode, by operating the rotary motor (120), the guide piece (110a) moves over the purge funnel (130) to pour the sample through the purge funnel (130) back into the post-harvest application tank while purging the duct with the new sample.

In the analysis mode, the guide piece (110a) moves over the mixing flask (140) to dispense, through a precision external dosing system incorporated prior to the sample tube inlet (not shown in figures), a certain amount of sample inside the mixing flask (140), where dilution of the sample with solvent will occur.

Thus, the guide piece (110a) is configured to precisely move and position (guide) the sample tube (110b), which dispenses the sample to the appropriate position: to the center of the purge funnel (130) or to the center of the mixing flask (140), at each time of analysis: purge mode or analysis mode. The sample tube (110b) is a flexible tube of smaller diameter than the guide piece (110a), and is inserted inside it, which functions as a rigid tutor or support, this rigidity is what allows precision in the positioning.

The mixing chamber comprises a second capacitive sensor (145) as shown in Figure 3. This second capacitive sensor (145) is configured to detect overflow of the purge funnel (130) due to blockage or poor circulation of the recirculated fluid.

Figure 4 is a front view of the mixing flask (140) of the mixing chamber (100) according to the current invention. The mixing flask (140), preferably made of glass, comprises three glass connectors (171a, 171b, 171c) for three pipes (170a, 170b, 170c). Mixing flask (140) is configured to perform mixing between a sample and solvent and generate a diluted sample. As can be seen in Figure 4, which shows a front view of the mixing flask (140), the glass connector (171b) extends to the end of the mixing flask (140) as an internal glass channel.

To be able to perform the analysis of a post-harvest treatment mixture, a dilution of the sample in an appropriate solvent must be carried out beforehand. The sample is dispensed into the mixing flask (140) shown in figure 4 through the guide piece (110a) and the sample tube (110b), and then a certain amount of the solvent is applied through the pipe (170a) that connects to the flask (140) through the glass connector (171a). The solvent stems from an auxiliary tank and is dosed using a precision external dosing system (not shown in figures). The mixing flask (140) can comprise a pear-shaped geometry as shown in figure 4. The mixing flask (140) can be made of glass, a material that allows a correct mixing without stirring and emptying, and prevents cross contamination between one sample and the next by absorption on the material.

Figure 1 shows the transfer pump (160), configured to transfer a small aliquot of the diluted sample, subject to analysis, to an analyzer system using the capillary tube (170c) and connector (171c).

Figure 1 also shows the drain pump (150), configured to empty the remaining diluted sample, not subject to analysis (which can be deposited in a waste tank not shown in figures), using the tube (170b) and the connector (171b).

Once the aliquot of the diluted sample has been transferred to the sample analyzer, the remaining diluted sample can be discarded. To this end, the mixing flask is emptied (140) in its entirety for the next analysis. The connector of the mixing flask (140) forms an internal glass channel as shown in figure 4, as a guide, through which the emptying tube (170b) runs to the bottom of the mixing flask (140), this results in a total emptying of the mixing flask (140).

With the aim of obtaining representativeness in the sampling operation and precision in the dilution operation it is necessary to work with larger volumes of sample and solvent than are then actually needed in the small aliquot that is needed for the sample analyzer. This require "more preparation" and the need to empty the rest before the next sample.

## Claims

1. Mixing chamber (100) configured to dilute a post-harvest treatment sample with solvent, wherein the post-harvest treatment is obtained from a post-harvest applications tank, wherein the solvent is obtained from a tank containing solvent, the mixing chamber (100) comprises:
- a sample application duct (110) configured to supply the post-harvest treatment sample to a mixing flask (140);
- a purge funnel (130) configured to collect post-harvest treatment from a purge of the sample application duct (110); and
- the mixing flask (140) configured to:
∘ receive the post-harvest treatment sample from the sample application duct (110);
∘ receive solvent from the tank containing solvent;
∘ dilute the post-harvest treatment sample with solvent; and
∘ generate a post-harvest treatment sample diluted with solvent,
wherein the sample application duct (110) comprises:
∘ a sample tube (110b) configured to pour post-harvest treatment onto the mixing flask (140) or onto the purge funnel (130); and
∘ a guide piece (110a) configured to move the sample tube (110b).

2. The mixing chamber (100) according to the previous claim, comprising one or more inductive sensors (125) configured to monitor the movement of the guide piece (110a).

3. The mixing chamber (100) according to claim 1, which further comprises a rotary motor (120) connected to the guide piece (110a), wherein the rotary motor (120) is configured to turn the guide piece (110a) on the shaft of the guide piece (110a), where the guide piece (110a) is configured to be positioned in an analysis mode on the mixing flask (140), or in a purge mode on the purge funnel (130).

4. The mixing chamber (100) according to the previous claims, wherein the mixing flask (140) comprises:
- a first connector (171a);
- a second connector (171b) extending to the bottom of the mixing flask (140) forming an internal glass channel; and
- a third connector (171c).

5. The mixing chamber (100) according to the previous claim, comprising:
- a first tube (170a) connected to the mixing flask (140) through the first connector (171a) and to the solvent tank and configured to supply solvent to the mixing flask (140);
- a second tube (170b) connected to the mixing flask (140) through the second connector (171b) and to a drain pump (150) configured to evacuate the diluted sample not subject to analysis; and
- a third tube (170c) connected to the mixing flask (140) through the third connector (171c) and a transfer pump (160) configured to evacuate an aliquot of the diluted sample subject to analysis.

6. The mixing chamber (100) according to claim 5, which further comprises the drain pump (150) connected to the second tube (170b) configured to empty the diluted sample not subject to analysis.

7. The mixing chamber (100) according to claims 5 or 6, further comprising at least one first capacitive sensor (135) configured to monitor the emptying of the mixing flask (140).

8. The mixing chamber (100) according to claim 5, further comprising the transfer pump (160) connected to the third tube (170c) configured to transfer the aliquot of the diluted sample subject to analysis.

9. The mixing chamber (100) according to the previous claims, which further comprises at least a second capacitive sensor (145) configured to detect if overflow of the purge funnel (130) occurs.

10. The mixing chamber (100) according to the previous claims, wherein the mixing flask (140) is made of glass.

11. The mixing chamber (100) according to the previous claims, wherein the mixing flask (140) is pear-shaped.
